# EUROPEAN PATENT APPLICATION

(11) **EP 4 668 574 A1**
(43) Date of publication of application: **24.12.2025**
(21) Application number: 24182872.2
(22) Date of filing: 18.06.2024
(51) Int. Cl.: H02S 30/10

(54) **SOLAR PANEL FRAME AND ASSEMBLIES WITH FLUSH-FRAME DESIGN AND ENHANCED LOAD-BEARING CAPACITY**

(71) Applicant: INNOVATÍV TÉRBURKOLATFEJLESZTÖ KFT., 4080 Hajdunanas Hajdu-Bihar (HU)
(72) Inventor: Sziszák, Imre, 1095 Budapest (HU); Ilyés, Miklós, 1096 Budapest (HU)

(57) **Abstract**

The present invention relates to solar photovoltaic (PV) panels designed for integration into walkable surfaces. The novel frame profile 200 features a cross-sectional design where the upper flange 327 does not extend over the light-transmissive layer 310, preventing debris accumulation and reducing physical damage risks. Utilizing thicker light-transmitting layer 310, preferably 6-12 mm, with edge finishing 311, the upper flange 327 frame 200 sits flush with or below the upper surface of the light-transmitting layer 310. The clamping surface 324 on the edges of the assembly 20 allows for the use of commercially available decking mounting systems. This innovative design simplifies installation and enhances durability, rendering the panels suitable for a wide range of applications, including decks, rooftops, balconies, terraces, event spaces, and bridges.

## Description

### Technical Field

The present invention relates to solar energy systems, specifically to solar photovoltaic (PV) panels designed for integration into walkable surfaces. More particularly, it involves an innovative solar panel frame and matching light-transmissive layer design that enhances the durability, safety, and aesthetic integration of solar panels used in horizontal, load-bearing applications.

### Background Art

Solar photovoltaic (PV) panels, which will hereinafter be referred to in this document as solar panel, have become critical in the global transition to renewable energy sources. Traditional solar panels are primarily designed for installation on rooftops, open fields, and other locations where they are not subjected to significant physical stress apart from wind or the weight of snow. However, there is a growing need for walkable solar panels in areas where roof-mounted installations are not feasible due to tornado hazards, city sight protection regulations, structural limitations of roofs, or simply a lack of available roof space.

Traditional solar panels typically consist of a light-transmissive layer, photovoltaic cells, encapsulant, backsheet, and an aluminium frame that provides structural support and protection against environmental factors for the encapsulant materials. This structure has proven to be long-lasting and cost-effective to manufacture, thus establishing itself as the only viable solution for solar panel applications worldwide. As a result, numerous companies specialize in producing these panels and the manufacturing equipment required for their production, driving down costs across the value chain through large-scale production. Therefore, a company aiming to manufacture walkable solar panels, while remaining price-competitive with traditional solar panels, must design products that can be efficiently produced using this existing value chain.

However, this conventional structure has several limitations when used in pedestrian pathways or similar applications. The upper edge of the frame typically extends over the light-transmissive layer, leading to the accumulation of water, mud, and debris. This not only blocks sunlight, thereby reducing the efficiency of the solar cells, but also poses safety risks as the surface can become slippery or hazardous. The protruding frame edges are prone to damage from foot traffic. Shoes can scuff or dent the aluminium, and repeated impact can weaken the structural integrity of the frame. U.S. Published Patent Application No. US 4167644 A (KURTH et al.) 1978-09-29 and U.S. Published Patent Application US 4239555 A (SCHARACK et al.) 1979-07-30 both disclose such PV panel assemblies with edges over the light-transmissive layers, rendering them unsuitable for horizontal applications.

Several innovative frame assemblies are known. International Patent Application No. WO 2023114153 A1 (HAFTER et al.) 2022-12-12 discloses a solar panel frame with improved wire management capabilities. U.S. Published Patent Application US 20110139219 A1 (YEH et al.) 2010-11-30 discloses solar panel frame solutions with improved cooling properties. U.S. Published Patent Application No. US 20240128388 A1 (XU Jianmei) 2023-12-18 discloses a solar panel edge design that enables easier fixing to support structures. All the above are frame-over designs, therefore once again not suitable for horizontal application.

Traditional frame-over designs also lack sufficient load-bearing capacity, making them vulnerable to cracking under heavy loads, such as from pedestrians or maintenance equipment. U.S. Published Patent Application No. US 20050199282 A1 (OLEINICK et al.) 2005-03-11 and U.S. Published Patent Application US 20180102730 A1 (BRUSAW et al.), 2017-12-13 both disclose solar panel assemblies that may be used on horizontal surface applications. However, both lack framing of the panel, which either makes the applications non-durable or assumes a whole new manufacturing process, significantly increasing production development costs. The former application mentions framing but only as an additional element, not as an integral part of the assembly. Spain Published Patent Application No. ES 2438441 B1 (BELTRAN ALBARRAN et al.) 2012-06-14 also discloses a solar panel assembly suitable for horizontal, walkable application where the frame does not protect the edge sealant, which is crucial for durable assemblies. This also assumes a different manufacturing method, increasing costs. U.S. Published Patent Application No. US 20210324586 A1 (JOE DON BYLES) 2021-07-01 discloses a PV panel assembly that is suitable for pedestrian traffic. This panel assembly uses a traditional frame-over-edge solution and then adds another light-transmissive layer on top of the panel to solve the problem of flat edge design, which adds additional costs and lowers potential light transmission, thus reducing output and economic viability.

Furthermore, the state-of-the-art methods used to secure traditional frame-over-edge solar panels to supporting structures are often complex and unsuitable for pedestrian traffic, as they present a tripping hazard with overhanging edge clamps. These installations typically require specialized hardware and labour-intensive procedures, making them impractical for easy installation by untrained personnel who are otherwise capable of installing pedestrian surfaces. U.S. Published Patent Application No. US 20170019057 A1 (ALMY et al.) 2015-07-15, U.S. Published Patent Application No. US 9837955 B1 (SCHUIT et al.) 2016-06-03, U.S. Published Patent Application No. US 10749459 B1 (LIU et al.) 2019-05-10, and U.S. Published Patent Application No. US 20130011187 A1 (SCHUIT et al.) 2011-07-08 all disclose clamping methods for solar panel frames. All solutions are suitable for roof-mounting applications with over-edge designs, where tripping hazards are not present. Such clamping methods are not suitable for pedestrian applications.

If a design does not operate with overhanging edge clamps, it usually requires space between solar panels, which is disadvantageous in vertical applications as it again presents a tripping hazard and a place for accumulation of dirt. U.S. Published Patent Application No. US 6959517 B2 (PODDANY et al.) 2003-05-09 discloses a solar panel frame with side fixing capabilities, with a significant required distance between solar panels. U.S. Published Patent Application No. US 20120298188 A1 (WEST et al.) 2012-03-29 discloses a frame and coupling system that allows narrower spaces between solar panels but still requires a significant amount of distance between elements.

### Summary of Invention

The term "frame" as used herein refers to any structural frame utilized in the construction of solar panel systems. It is understood that, in the industry, aluminium extrusions are predominantly employed for this purpose due to their lightweight properties, high strength, and resistance to corrosion. Aluminium extrusion is a process in which aluminium alloy is forced through a die to create objects with a fixed cross-sectional profile. While aluminum extrusions are the most common, the term "frame" is not limited to this material and includes frames made from other materials and manufacturing processes as well.

The term "light-transmitting" as used in this document refers to materials that are capable of transmitting electromagnetic radiation within the spectrum useful for the operation of photovoltaic (PV) cells. Such materials can include, but are not limited to, tempered glass, thermoplastics, and resins.

The term "edge finishing," as used herein, refers to the process of refining and treating the edges of materials, particularly glass and other substrates, to achieve specific functional and aesthetic properties. Techniques encompassed by edge finishing include chamfering, beveling, mitering, and other methods designed to smooth, shape, or otherwise modify the edges.

The term "flush-frame," as used herein, refers to a structural frame configuration where components or surfaces are aligned in a smooth and even manner, typically without protrusions or offsets. In the context of this invention, a flush-frame design ensures that finished edges and flanges are seamlessly integrated to be level or with the flange sitting a minimal amount below.

The present invention overcomes the limitations of traditional solar panel frames by introducing a novel frame profile with several innovative features. The frame incorporates a cross-sectional design where the upper flange does not extend over the light-transmissive layer, thereby preventing the accumulation of debris and mitigating the risk of physical damage from foot traffic. The use of edge finished light-transmissive layer edges allows the frame to sit flush with, or in some applications, below the level of the light-transmissive layer. The flange of the frame is capable of slight deformation and is designed in such a way that when the glass is pressed into it, a mechanical bond is created by this action alone.

Typically, solar panels utilize light-transmitting layer, preferably tempered glass with a thickness ranging from 3 to 4 mm, which provides sufficient protection for conventional installations. However, in the present invention, the light-transmitting layer used is preferably between 6 to 12 mm thick. This increased thickness enhances the load-bearing capacity of the panels, making them suitable for walkable surfaces. The thicker glass also allows for the glass to be given a precise edge finishing, ensuring that the flush-frame design can be implemented effectively, as the thicker glass can be securely fitted into the frame while maintaining the desired mechanical bond and structural integrity.

Additionally, the bottom part of the frame includes a horizontal chamber that creates a suitable horizontal clamping surface for various clips on the outer edges, thus facilitates easy attachment to supporting structures. This innovation simplifies the installation process, reduces the need for specialized tools, and allows for flexible mounting on various surfaces, including joists and WPC systems.

Furthermore, the frame design supports the light-transmissive layer over a wider surface area, increasing the load-bearing capacity of the panels. This ensures that the panels can withstand significant physical stress and heavy loads, making them suitable for walkable applications.

The design enables small gaps between panels by the compatibility with widely available clamping parts, and it can be accessed and serviced from the top, therefore addresses issues related to the surface accumulation of debris and physical damage caused by foot traffic.

### Technical Problem

Traditional solar panel frames are not designed for walkable surfaces and have several limitations when used in pedestrian pathways or similar applications. The upper flange of the aluminium frame typically extends over the glass, leading to the accumulation of water, mud, and debris, which blocks sunlight and poses safety risks. The protruding frame flanges are prone to damage from foot traffic, and traditional designs lack sufficient load-bearing capacity, making them vulnerable to cracking under heavy loads. Additionally, the methods used to secure traditional solar panels to supporting structures are complex, inefficient in horizontal applications, and do not provide a possibility for non-professional installation, individuals without specialized training to assemble and install the solar panels effectively and safely.

### Solution to Problem

The invention provides a novel solar panel frame profile with a cross-sectional design where the upper flange does not cover the glass surface, preventing the accumulation of debris and reducing wear. Edge finished light-transmissive layer edges allow the frame to sit flush with or below the glass surface, creating a smooth and walkable surface. The bottom part of the frame includes a horizontal chamber that facilitates easy attachment to supporting structures using simple commercially available clips, simplifying the installation process, reducing the need for specialized tools, and allowing for flexible mounting on various surfaces. The frame design supports the glass over a wider surface area, increasing the load-bearing capacity of the panels.

### Advantageous Effects of Invention

The advanced design of this solar panel frame makes it suitable for a variety of applications, including decks, rooftops, balconies, terraces, event spaces, outdoor venues, bridges, and overpasses. It provides both functional flooring and solar energy generation, offering walkable solar surfaces for residential and commercial buildings, integrating solar panels into outdoor living spaces, and enhancing infrastructure with renewable energy capabilities. The design prevents debris buildup, mitigates physical damage from foot traffic, simplifies installation, and increases load-bearing capacity, ensuring durability and efficiency in high-traffic areas.

### Brief Description of Figures

The prior art of the invention will be described in the Detailed Description of Figures chapter with reference to the accompanying figures, in which
Fig.1 illustrates a cross-section of a prior art solar panel assembly,
Fig 2 illustrates a prior art traditional solar panel mounting system.
   The embodiments of the invention will be described with reference to the accompanying figures, in which
Fig.3 illustrates a cross-section of the disclosed solar panel frame and assembly with flush-frame design and enhanced load-bearing capacity,
Fig.4 illustrates a mounting method of the disclosed solar panel assembly with flush-frame design and enhanced load-bearing capacity in a square embodiment,
Fig.5 illustrates an example installation of the disclosed solar panel assembly with flush-frame design and enhanced load-bearing capacity in a square embodiment,
Fig.6 illustrates a particularly advantageous rectangular embodiment of the solar panel assembly with flush-frame design and enhanced load-bearing capacity in an example installation,
Fig.7 illustrates a particularly advantageous rectangular embodiment of the solar panel assembly with flush-frame design and enhanced load-bearing capacity with connection method,
Fig.8 illustrates cross-section examples of the edge finishing on the light-transmissive layer in connection to the disclosed flush-frame design and enhanced load-bearing capacity, as they are referred to in technical terminology, particularly:
   A. Bullnose
   B. Miter
   C. OG
   D. Pencil
   E. Double bevel
   F. Chamfer

### Detailed Description of Figures

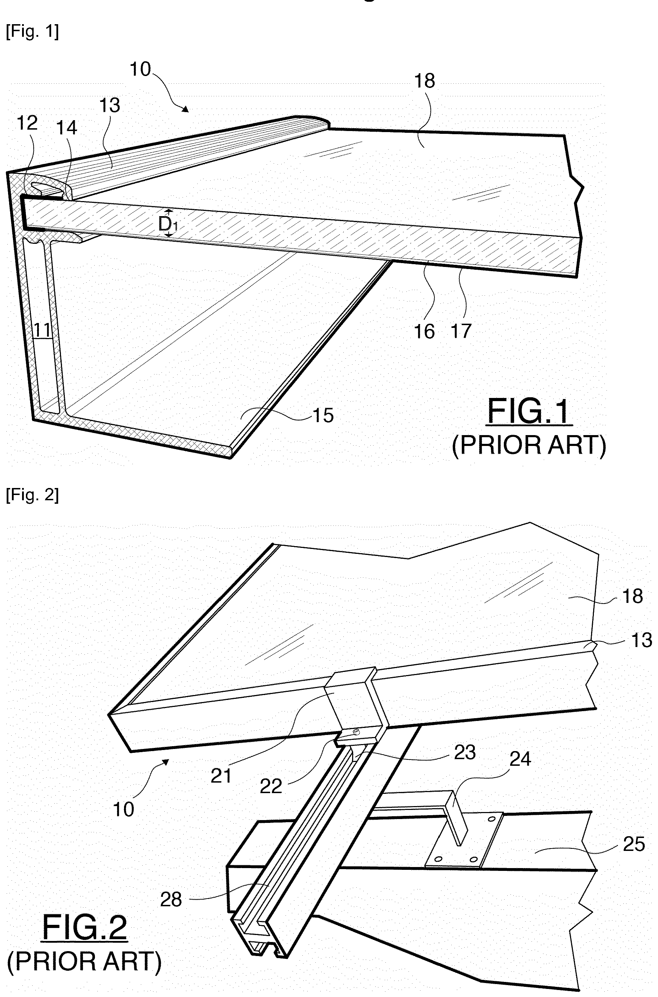

Figure 1 illustrates a cross-section of a prior art solar panel assembly.

The core component of the solar panel 10 is the photovoltaic cells, which are responsible for converting sunlight into electricity. These cells are typically made of silicon and are often arranged in a grid-like pattern on the surface of the solar panel 10. To protect these cells, they are laminated with two layers of encapsulant 16, a backsheet 17 (a durable, weather-resistant polymer layer on the rear side), and a light-transmissive layer 18 on the front. This encapsulation ensures the cells remain intact and functional over an extended period. Surrounding the edges is a frame 13, which is preferably lightweight and corrosion resistant. This frame provides structural integrity and facilitates mounting the panel onto various surfaces with its horizontal parts 15. Standard frames often feature a single vertical chamber 11 for accommodating the corner connectors and a part that extends over the light-transmissive layer 14. The inner parts of the frame are often filled with an edge sealant 12, which protects the encapsulation. Typically, solar panels utilize tempered glass with a thickness ranging from 3 to 4 mm, which provides sufficient protection for conventional installations D₁.

Figure 2 illustrates a prior art solar panel roof mounting system.

In this system, the solar panel 10 is secured using mounting clamps 21, mounting clips 23, and bolts 22, which are attached to the frame 13. The design ensures that the light-transmissive layer 18 remains unobstructed and free from clamping, thus preventing any potential damage to the light-transmissive layer. The mounting clamps 21 are connected to racking 28, which provides a stable platform for the solar panel 10. This racking 28 is subsequently affixed to a roof hook 24. The roof hook 24 is screw-mounted directly to a rafter 25, ensuring a secure and stable attachment to the roof structure.

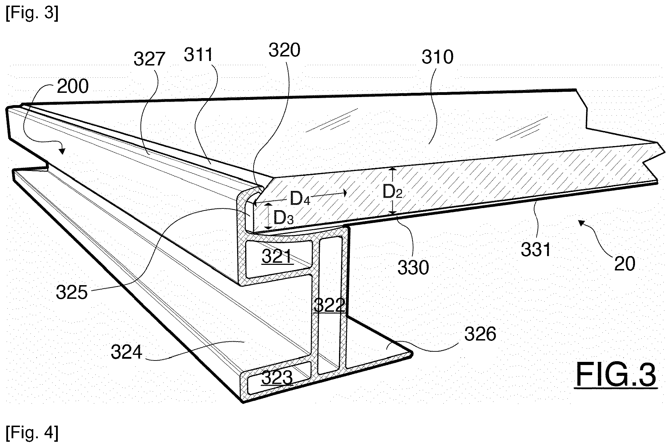

Figure 3 illustrates a cross-section of the disclosed solar panel frame and assembly featuring a flush-frame design with enhanced load-bearing capacity.

The solar panel assembly 20, incorporating the flush-frame design, comprises a frame 200 and a light-transmitting layer 310. The light-transmitting layer 310 is laminated together with two layers of encapsulant 330, which encapsulate the photovoltaic cells and a backsheet 331. The light-transmitting layer 310 can be characterized by a thickness D₂, preferably ranging from 6 mm to 14 mm. The frame 200 includes an upper flange 327, with a contact edge 320 specifically designed to match precisely with the specially processed matching edge 311 of the light-transmitting layer 310. This matching edge finish 311 can be characterized by a starting distance of the processed edge D₃ form the bottom part of light-transmitting layer 310, which is preferably half of D₂, providing an appropriate surface width to meet the upper flange 327 on the matching edge 320 while maintaining the necessary physical properties.

The frame 200 in this embodiment includes a vertical chamber 322 and a horizontal chamber 323, which serves as a platform for clamping the assembly to the foundation, thereby creating the clamping surface 324. Additionally, another horizontal chamber 321, in conjunction with the vertical chamber 322, creates a wide support surface for the light-transmitting layer 310 along the length D₄ for an increased load-bearing capacity. The bottom flange part 326 of the frame 200 assists in weight distribution, thereby enhancing the overall load-bearing capacity and structural integrity of the solar panel assembly. The inner cavities of frame (200) are filled with edge sealant 325.

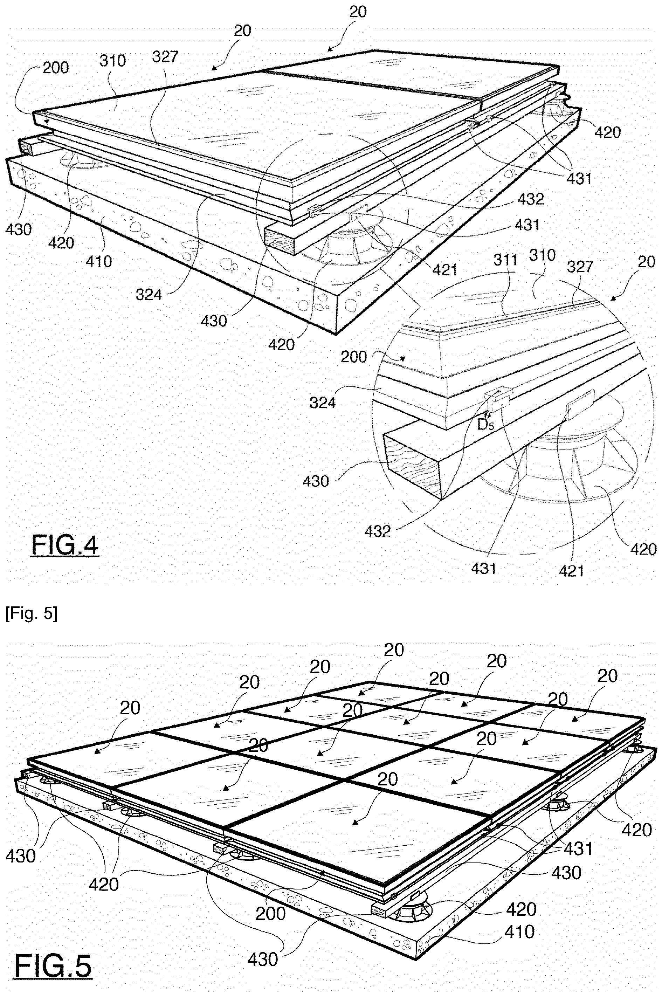

Figure 4 illustrates a mounting method for the disclosed solar panel assembly with a flush-frame design and enhanced load-bearing capacity in a square embodiment.

The solar panel assembly 20, incorporating the flush-frame design, comprises a frame 200 with an upper flange 327 and a light-transmitting layer 310 with a matching edge 311. The assembly is advantageously installed on decking joists 430, which may be made of wood, composite, aluminium, or other materials. The solar panel assembly 20 is mounted to the joists 430 using standard market-available WPC clips 431 and preferably self-tapping screws 432, which rest on the clamping surface 324. The distance between solar panel assemblies, D₅, commonly referred to as the gap, is determined solely by the size of the clip used, typically 5-7 mm. The joists 430 are supported by adjustable decking pedestals 420, aided by spacer blocks 421. The entire installation is placed on a relatively level surface 410, such as concrete or gravel.

Figure 5 illustrates an example installation of the disclosed solar panel assembly with flush-frame design and enhanced load-bearing capacity in a square embodiment,

The solar panel assemblies 20, incorporating the flush-frame design with the disclosed frame 200, can be installed in any number of necessary rows and columns. The solar panel assemblies 20 are mounted to the joists 430 using standard market-available WPC clips 431. The joists 430 are supported by adjustable decking pedestals 420. The entire installation is placed on a relatively level surface 410, such as concrete or gravel.

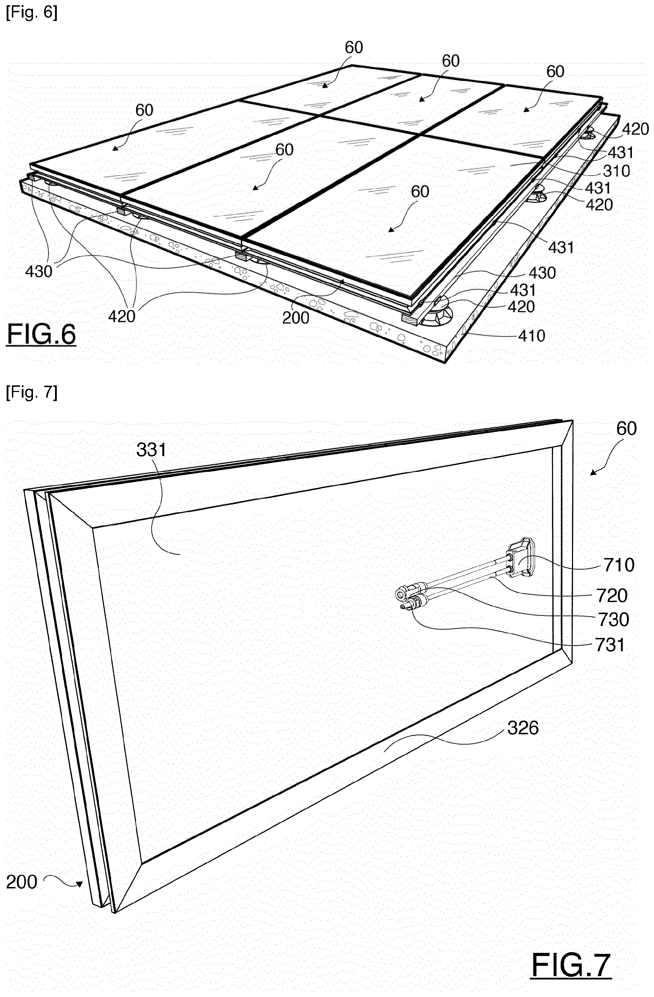

Figure 6 illustrates a particularly advantageous rectangular embodiment of the solar panel assembly with flush-frame design and enhanced load-bearing capacity in an example installation,

A particularly advantageous embodiment of the solar panel assemblies 60, incorporating a larger number of cells, the longer disclosed frame 200, and the light-transmitting layer 310, can be installed in any number of necessary rows and columns. Due to their rectangular shape, the solar panel assemblies 60 are more advantageous, allowing larger surfaces to be covered more quickly and cost-effectively. The solar panel assemblies 60 are mounted to the joists 430 using standard market-available WPC clips 431. The joists 430 are supported by adjustable decking pedestals 420. The entire installation is placed on a relatively level surface 410, such as concrete or gravel.

Figure 7 illustrates a particularly advantageous rectangular embodiment of the solar panel assembly with flush-frame design and enhanced load-bearing capacity with connection method,

A particularly advantageous embodiment of the backside of a solar panel assembly 60, featuring the disclosed frame 200, bottom flange part 326, and backsheet 331. A junction box 710 is depicted in an advantageous position, which contains the live busbar outlets. Connected to the junction box 710 are cables 720, which are terminated with preferably MC4 connectors, including a female connector 730 and a male connector 731.

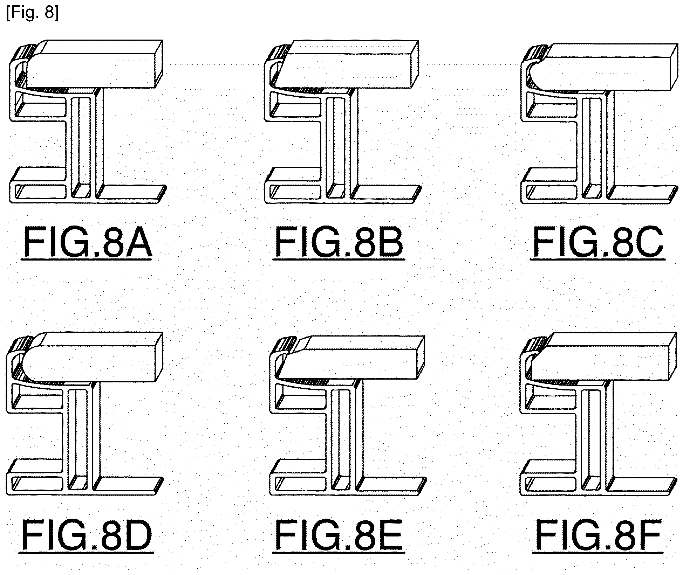

Figure 8 illustrates cross-section examples of the edge work on the light-transmissive layer in connection to the disclosed flush-frame design and enhanced load-bearing capacity, as they are referred to in technical terminology, particularly:
A. Bullnose: This method involves rounding the edges to create a smooth, curved surface. The bullnose edge is characterized by its rounded profile, resembling a half-circle.
B. Miter: This method involves cutting almost all or all vertical part of edges at an angle, typically 45 degrees.
C. OG (also referred to as: Ogee): This method features an "S"-shaped profile, combining concave and convex curves.
D. Pencil: In case of this method the edges are rounded slightly, resembling the profile of a pencil.
E. Double bevel: This method cuts the top edges at two different angles, creating a flat, faceted edge instead of a sharp corner.
F. Chamfer: This method cuts the top edges at a 45-degree angle, creating a flat, faceted edge instead of a sharp corner.

### Description of Embodiments

An advantageous embodiment of the invention comprises a frame 200 with three distinct chambers integrated into its structure, as depicted in Figure 3. The frame 200 includes a vertical chamber 322, a horizontal chamber 321, and an additional horizontal chamber 323 positioned at the bottom, which collectively serve as a platform for clamping the assembly to the foundation, thereby creating a robust clamping surface 324. The configuration of the horizontal chamber 321 in combination with the vertical chamber 322 provides a wide support surface for the light-transmitting layer 310 along the length D4, thereby enhancing the load-bearing capacity. Furthermore, the bottom flange part 326 of the frame 200 aids in distributing weight, thereby improving the overall structural integrity and load-bearing capacity of the solar panel assembly 20 and 60 as latter is depicted in Figure 6.

Connected to the frame's 200 upper flange 327 is a horizontal chamber 321 designed to support the light-transmissive layer 310. It is advantageous if no photovoltaic (PV) cells are incorporated between this portion and the light-transmissive layer 310, as the presence of load on the surface might cause microcracks in the PV cells. Additionally, the aforementioned vertical chamber 322 is advantageous for frame assembly purposes, facilitating easy manufacturing and robust integration of the frame components, as is evident to one skilled in the art. This vertical chamber 322 connects the two horizontal chambers 321 and 323, thereby enhancing the structural coherence of the frame 200.

An advantageous embodiment of the invention involves assembling segments of the disclosed frame 200 into a rectangular shape assembly 60, effectively integrating the disclosed components to form a functional solar panel as it is depicted in Figure 6 and Figure 7, allow for more efficient coverage of larger surfaces. These assemblies are installed in any necessary configuration of rows and columns. The bigger format with rectangular shape enables quicker and more cost-effective installation, making it suitable for large-scale applications. The solar panel assemblies 60 are mounted to joists 430 using standard market-available WPC clips 431. These joists are supported by adjustable decking pedestals 420 and the entire installation is placed on a relatively level surface 410, such as concrete or gravel.

An advantageous embodiment of the invention involves assembling segments of the disclosed frame into a square shape assembly 20, effectively integrating the disclosed components to form a functional solar panel as it is depicted in Figure 4 and Figure 5. These assemblies are installed in any necessary configuration of rows and columns. This embodiment is typically advantageous in smaller scale installations. The solar panel assemblies 20 are mounted to joists 430 using standard market-available WPC clips 431. These joists are supported by adjustable decking pedestals 420 and the entire installation is placed on a relatively level surface 410, such as concrete or gravel.

Additionally, Figure 7 illustrates the backside of a solar panel assembly 60, demonstrating an advantageous method for cable management. This embodiment includes the frame 200, bottom flange part 326, and a backsheet 331. A junction box 710 is depicted, housing the live busbar outlets. Cables 720, preferably terminated with MC4 connectors, including a female connector 730 and a male connector 731, are connected to the junction box 710. These cables are preferably sized to have the necessary length to overhang the joists 430 and connect to their corresponding counterparts.

Furthermore, Figure 8 illustrates various edge treatment methods for characterizing the edge 311 of the light-transmitting layer 310 in the disclosed solar panel assemblies.

### Industrial Applicability

The present invention is applicable within the renewable energy sector, specifically for designing walkable solar panels. It is suitable for residential, commercial, and public infrastructure, including energy-generating decks, rooftops, balconies, terraces, event spaces, and outdoor venues, as well as bridges and overpasses.

The frame's design aligns the upper edge with the glass surface to prevent debris accumulation and reduce wear, making it ideal for horizontal applications with pedestrian traffic. Its enhanced load-bearing capacity and simplified attachment mechanism ensure easy installation, even by untrained personnel. This facilitates the wider adoption of solar technology in areas where traditional roof-mounted installations are not feasible, addressing the growing demand for sustainable energy solutions.

### Patent Literature

PTL1: US 4167644 A (KURTH et al.) 1978-09-29, [0004]
PTL2: US 4239555 A (SCHARACK et al.) 1979-07-30, [0004]
PTL14: US 6959517 B2 (PODDANY et al.) 2003-05-09, [0007]
PTL6: US 20050199282 A1 (OLEINICK et al.) 2005-03-11, [0006]
PTL4: US 20110139219 A1 (YEH et al.) 2010-11-30, [0005]
PTL13: US 20130011187 A1 (SCHUIT et al.) 2011-07-08, [0007]
PTL15: US 20120298188 A1 (WEST et al.) 2012-03-29, [0007]
PTL8: ES 2438441 B1 (BELTRAN ALBARRAN et al.) 2012-06-14, [0006]
PTL10: US 20170019057 A1 (ALMY et al.) 2015-07-15, [0007]
PTL11: US 9837955 B1 (SCHUIT et al.) 2016-06-03, [0007]
PTL7: US 20180102730 A1 (BRUSAW et al.), 2017-12-13, [0006]
PTL12: US 10749459 B1 (LIU et al.) 2019-05-10, [0007]
PTL9: US 20210324586 A1 (JOE DON BYLES) 2021-07-01, [0006]
PTL3: WO 2023114153 A1 (HAFTER et al.) 2022-12-12, [0005]
PTL5: US 20240128388 A1 (XU Jianmei) 2023-12-18, [0005]

## Claims

1. A solar panel assembly (20, 60) comprising:
a. one or more light-transmitting layer (310), photovoltaic cells, encapsulant (330), and optionally a backsheet (331);
b. a frame (200) surrounding the edges of the photovoltaic laminate, the frame having a unique cross-sectional design wherein the upper flange (327) of the frame does not extend over the light-transmitting layer (310);
c. wherein the light-transmitting (310) layer is edge finished (311) at the edges specifically to align flush with the upper edge of the flange (327).

2. **The solar panel assembly of claim 1,** wherein the frame includes multiple chambers, including one vertical chamber and at least two horizontal chambers, designed to enhance the structural integrity and load-bearing capacity of the frame.

3. **The solar panel assembly of claim 1,** wherein the bottom part of the frame includes a horizontal chamber configured in such dimensions to facilitate attachment to supporting structures using commercially available WPC mount elements (clipses).

4. **The solar panel assembly of claim 1,** wherein the frame supports the light-transmitting layer over a wider surface area compared to traditional frames, thereby increasing the load-bearing capacity of the panel.

5. **The solar panel assembly of claim 1,** wherein the photovoltaic laminate is structured so that no photovoltaic cells are located between the frame and the light-transmitting layer.

6. **The solar panel assembly of claim 1,** wherein the frame includes an integral edge sealant (325) to protect the encapsulant materials from environmental factors.

7. **The solar panel assembly of claim 1,** wherein the assembly is filled with a material to increase weight and inertia, thereby providing enhanced stability and durability for intensively used areas, wherein the material is selected from the group consisting of, but not limited to, concrete and thermoplastic composite.

8. **The solar panel assembly of claim 1,** wherein the upper surface of the light-transmitting (310) layer is treated with an anti-skid method, such as acid etching or sand blasting.

9. **The solar panel assembly of claim 1,** wherein the bottom part of the light-transmitting layer (310) is painted along its width D₄.
